# EUROPÄISCHE PATENTSCHRIFT

(11) **EP 0 399 217 B1**
(45) Veröffentlichungstag und Bekanntmachung des Hinweises auf die Patenterteilung: **21.06.1995**
(21) Anmeldenummer: 90107596.0
(22) Anmeldetag: 21.04.1990
(51) Int. Cl.: B60S 1/08

(54) **Verfahren zur Steuerung eines Antriebsmotors einer Kraftfahrzeug-Scheibenwischanlage**
Drive motor control procedure for vehicle window wiping arrangement
Procédé pour commander un moteur d'entraînement d'une installation d'essuie-glace de véhicule automobile

(30) Priorität: 20.05.1989 DE 3916549
(43) Veröffentlichungstag der Anmeldung: 28.11.1990
(73) Patentinhaber: DAIMLER-BENZ AKTIENGESELLSCHAFT, 70327 Stuttgart (DE)
(72) Erfinder: Ruoff, Harald, Dipl.-Ing., D-7000 Stuttgart 1 (DE); Leistenschneider, Raimund, Dipl.-Ing., D-7032 Sindelfingen 6 (DE)

(56) Entgegenhaltungen:
- DE-A- 3 021 877
- DE-A- 3 527 406
- DE-B- 2 503 767
- FR-A- 2 515 588

## Beschreibung

Die Erfindung bezieht sich auf ein Verfahren zur Steuerung eines Antriebsmotors einer Kraftfahrzeug - Scheibenwischanlage mit den Merkmalen des Oberbegriffs des Patentanspruchs 1. Ein gattungsgemäßes verfahren läßt sich aus der Funktionsweise einer bekannten Schaltanordnung (DE 30 21 877 A1) für den Intervallbetrieb eines Scheibenwischermotors von Kraftfahrzeugen herleiten. Mit dieser gattungsgemäßen Schaltanordnung hängt der Betrieb bzw. die Wischintervalldauer des Wischermotors in einer von drei Betriebsstellungen des Scheibenwischer - Steuerschalters von einem Schwellwert der Fahrgeschwindigkeit ab. Oberhalb des Schwellwertes wird die Wischintervallpause zu Null, d. h. der Scheibenwischermotor läuft im Dauerbetrieb. Unterhalb des Schwellwertes nimmt die Wischintervallpause einen bestimmten, von Null verschiedenen Wert an, der fest oder manuell/automatisch variierbar sein kann.

Durch diese rein geschwindigkeits- oder auch drehzahlabhängige automatische Umschaltung auf eine nächstniedrigere Wischgeschwindigkeitsstufe wird aber mit der bekannten Schaltanordnung unter ungünstigen Umständen, z. B. bei schnell wechselnder Niederschlagsdichte, dem Bedürfnis des Fahrzeugbenutzers nach einwandfreier Sicht auch bei verlangsamter Fahrt oder Stillstand seines Fahrzeuges nicht immer hinreichend Genüge getan.
Der Fahrzeugbenutzer kann zwar jederzeit eine andere Stellung des Steuerschalters manuell einstellen, hat dann aber mit der bekannten Schaltanordnung nicht mehr die automatische Umschaltung auf eine langsamere Wischergeschwindigkeit zur Verfügung.
Würde man die automatische Wischgeschwindigkeitsumschaltung der bekannten Schaltanordnung auf alle Geschwindigkeitsstufen des Scheibenwischer - Antriebsmotors anwenden, so wäre unterhalb des Fahrgeschwindigkeitsschwellwertes z. B. das Einschalten der schnellsten Wischerstufe überhaupt nicht mehr möglich.

Es ist auch bekannt (DT 25 03 767 C2), einen Antriebsmotor einer Scheibenwischanlage eines Kraftfahrzeugs abhängig von einem Schwellwert seiner Stromaufnahme vom Dauer- auf Intervallbetrieb, also auf die nächstniedrigere Geschwindigkeitsstufe, umzuschalten. Bei hoher Stromaufnahme wird auf geringe Benetzung der zu wischenden Fläche, d. h. geringe auftreffende Regenmenge, geschlossen, so daß dann zur Entlastung des Fahrzeugbenutzers automatisch auf Intervallbetrieb umgeschaltet werden kann. Gleichwohl kann der Fahrzeugbenutzer den oder die Scheibenwischer innerhalb eines solchen automatisch eingeschalteten Wischintervalls durch einen separaten (Fuß-) Schalter unter Verkürzung des Intervalls auch willkürlich aktivieren.

Es ist bekannt (DT-OS 1 530 979, DE 35 27 406 A1), die Dauer von Wischintervallen einer Scheibenwischanlage in Abhängigkeit von der Fahrgeschwindigkeit eines Fahrzeugs kontinuierlich zu verändern, wobei bei höherer Fahrgeschwindigkeit kurze Wischintervalle - bis hin zum Dauerbetrieb - und bei niedrigerer Fahrgeschwindigkeit längere Wischintervalle erzeugt werden. Bei diesen Anordnungen muß zwar kein Steuerschalter mit mehreren Schaltstellungen vorgesehen werden; andererseits hat der Fahrzeugführer damit auch keinen unmittelbaren Einfluß auf den Betrieb der Scheibenwischanlage.

Die Erfindung hat die Aufgabe, ein gattungsgemäßes Verfahren so auszubilden, daß der Fahrer in einfacher Weise die automatische Funktionsweise der Steuerschaltung übersteuern kann.

Diese Aufgabe wird mit den kennzeichnenden Merkmalen des Verfahrensanspruchs 1 erfindungsgemäß gelöst.

Bei Anwendung des erfindungsgemäßen Verfahrens kann der Fahrzeugbenutzer durch irgendeine Betätigung des Steuerschalters für den scheibenwischer - Antriebsmotor den Eingriff der automatischen Umschaltung nach Gutdünken übersteuern. Er kann also entweder eine andere Wischer - Geschwindigkeitsstufe einschalten - auf welche sich die auf alle Geschwindigkeitsstufen erweiterte automatische Umschaltung dann nicht auswirkt - oder die aufgrund der automatischen Umschaltung nach dem Unterschreiten des vorbestimmten Fahrgeschwindigkeitswertes außer Kraft gesetzte Geschwindigkeitsstufe manuell wieder in Kraft setzen. Jeder derartige manuelle Eingriff hat so lange Vorrang, bis der Schwellwert der Fahrgeschwindigkeit neuerdings von oben her unterschritten wird.

Es ist ein Steuergerät für den kontinuierlichen und/oder intermittierenden Betrieb insbesondere von Scheibenwischern bekannt (DT 24 03 311 A1), welches es zum einen ermöglicht, Wischintervalle eines Scheibenwischers durch aufeinander folgende Betätigungen des Scheibenwischer - Steuerschalters einzulesen und zu speichern.
Zum anderen kann der Scheibenwischer damit von intermittierendem (Intervall-)Betrieb auf kontinuierlichen Betrieb umgeschaltet werden, indem
- der Steuerschalter kurzfristig auf eine zweite Wischerstufe umgeschaltet wird oder
- der Steuerschalter zweimal hintereinander kurzzeitig aus- und wieder eingeschaltet wird oder
- der Steuerschalter während des Wischerlaufs einmal aus- und wieder eingeschaltet wird.
Bei diesem nicht gattungsgemäßen Steuergerät ist hingegen eine automatische, von der Fahrgeschwindigkeit abhängige Umschaltung von einer Wischer - Geschwindigkeitsstufe in die nächstniedrigere nicht vorgesehen.
Weil ein kontinuierlicher Betrieb des Wischers beim Einschalten des Steuergeräts durch den Fahrzeugbenutzer automatisch gewährleistet sein soll, ist außerdem keine fest vorgegebene Intervalldauer für den intermittierenden Betrieb gespeichert. Diese muß vielmehr bei Bedarf durch entsprechende Bedienung des Steuerschalters jedesmal neu eingelesen und gespeichert werden.

Die kennzeichnenden Merkmale der Unteransprüche 2 bis 4 offenbaren vorteilhafte Weiterbildungen des erfindungsgemäßen Verfahrens.

In der Zeichnung sind Ausführungsbeispiele sowohl für das erfindungsgemäße Verfahren als auch für die Vorrichtung dargestellt. Sie werden im folgenden näher beschrieben.

Es zeigen
- Figur 1: ein schematisches Flußdiagramm zur beispielhaften bildlichen Wiedergabe des erfindungsgemäßen Verfahrens,
- Figur 2: einen schematischen Schaltplan einer Vorrichtung zur Steuerung eines elektrischen Antriebsmotors einer Kraftfahrzeug-Scheibenwischanlage

### Beschreibung:

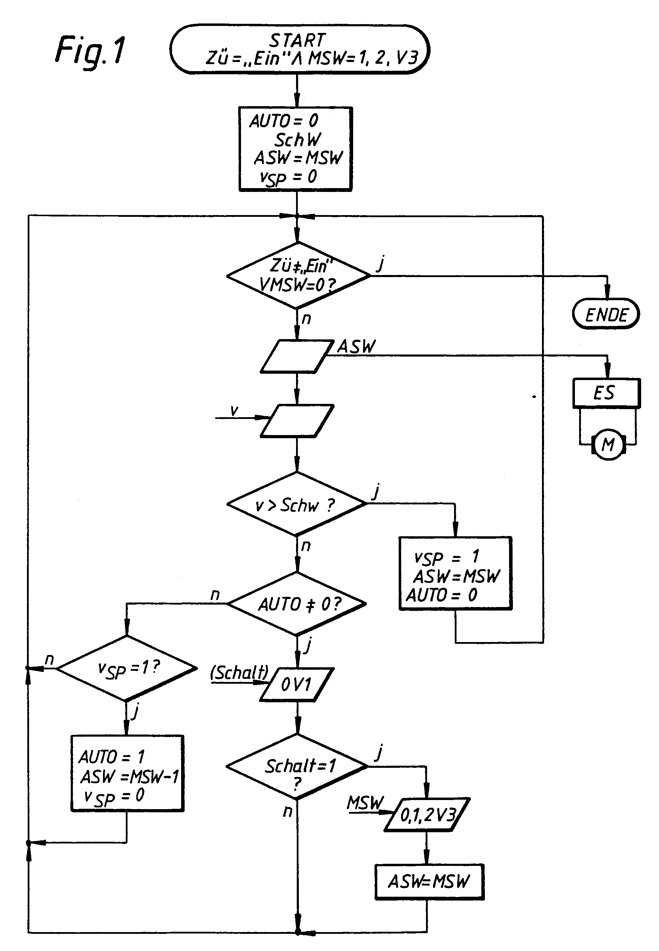

Das Flußdiagramm in **Figur 1** STARTet mit dem Einschalten des Zündschalters ("Zü" = Ein) und Scheibenwischer - Steuerschalter (= Ein, Variable "MSW" - für **m**anuelle **S**cheiben**w**ischereinstellung - mit den den Betriebsstellungen des Steuerschalters entsprechenden Zahlenwerten 1, 2 oder 3).
Als nächstes werden
- ein Fahrgeschwindigkeits -Schwellwert "SchW" {bspw. auf 40 km/h},
- eine binäre Zustandsvariable "AUTO" als Indikator für den von der automatischen Umschaltung beeinflußten Scheibenwischer - Betrieb {auf 0},
- eine Steuervariable ASW - für **A**ktivierung **S**cheiben**w**ischer - für den Scheibenwischer - Antriebsmotor auf denselben Zahlenwert wie die manuelle Vorgabe MSW, {also 1, 2 oder 3}, und
- ein binärer Fahrgeschwindigkeits - Speicher v_{SP} {auf 0}
gesetzt.
Zündschalter und Steuerschalter werden in jedem Umlauf der nun beginnenden Schleifen immer wieder abgefragt ("Schalterabfrage"). Sobald einer von ihnen ausgeschaltet wird [Zü ‡ "Ein" **oder** MSW = 0], verzweigt der Ablauf nach rechts zum ENDE.

Sind beide Schalter eingeschaltet, wird der Scheibenwischer - Antriebsmotor in die Geschwindigkeitsstufe geschaltet, die dem durch MSW vorgegebenen (bzw. automatisch eingestellten) Zahlenwert von ASW entspricht [Ausgabe von ASW an eine Endstufe "ES"].

Nun wird die Fahrgeschwindigkeit v mit dem Schwellwert SchW verglichen.
[v > Schw]: Ist ihr aktueller Wert größer als der Schwellwert, verzweigt der Ablauf nach rechts. Jede Überschreitung des Schwellwerts wird durch Setzen des Speichers V_{SP} -hier auf den Wert 1 - gespeichert. Dies ist notwendig, weil die automatische Umschaltung des Antriebsmotors nur dann greifen soll, wenn der Fahrgeschwindigkeits - Schwellwert von oben her durchlaufen wird.
Aus dem gleichen Grund wird AUTO in diesem Zweig immer auf 0 (zurück-)gesetzt.
Ferner wird ASW in jedem Durchlauf dieses Zweiges vor der Rückkehr zur Schalterabfrage auf den Wert von MSW (zurück-) gesetzt.

[v ≦ Schw]: Ist der aktuelle Fahrgeschwindigkeits - Wert jedoch kleiner als der Schwellwert oder stimmt er mit diesem überein, wird als nächstes abgefragt, ob die Zustandsvariable AUTO bereits gesetzt ist.
[AUTO = 0]: Ist dies nicht der Fall, so verzweigt der Ablauf nach links zu einer Abfrage des Speichers V_{SP}, um zu prüfen, ob der Fahrgeschwindigkeits -Schwellwert von oben her durchlaufen wurde.
[v_{SP} = 0]: Ist auch dies nicht der Fall, so kehrt der Ablauf wieder zur Schalterabfrage zurück.
[v_{SP} = 1]: Wurde der Speicher v_{SP} jedoch bereits gesetzt, so wird der Zustandsvariablen AUTO z. B. der Wert 1 zugewiesen und die Steuergröße ASW für den Scheibenwischer - Antriebsmotor um 1 gegenüber dem Zahlenwert des Scheibenwischersteuerschalters vermindert. Ferner wird noch der Speicher v_{SP} wieder auf 0 gesetzt, damit keine wiederholte automatische Umschaltung vorkommen kann. Danach kehrt der Ablauf wieder zur Schalterabfrage zurück.
Sind die Schalter zwischenzeitlich nicht ausgeschaltet worden, so wird nun der Antriebsmotor auf die dem verminderten Wert von ASW entsprechende - nächstniedrigere - Geschwindigkeitsstufe umgeschaltet.
[AUTO = 1]: Wenn der Antriebsmotor jedoch bereits einmal automatisch auf eine nächstniedrigere Geschwindigkeitsstufe umgeschaltet wurde, so wird nunmehr anhand des Inhalts eines weiteren Speichers [Schalt] überprüft, ob
- bei gesetztem Speicher v_{SP} und
- bei einer unter dem SWW liegenden Fahrgeschwindigkeit
ein Schaltvorgang am Steuerschalter vorgelegen hat.
[Schalt = 0]: Ist dies nicht der Fall, so bleibt die aktuelle Geschwindigkeitsstufe des Antriebsmotors unverändert; der Ablauf kehrt wieder zur Schalterabfrage zurück.
[Schalt = 1]: Ist dies der Fall, so wird die Steuergröße ASW wieder auf den Zahlenwert der Variablen MSW zurückgesetzt. Dieser Schritt führt die manuelle Übersteuerung der automatischen Umschaltung der Scheibenwischer - Geschwindigkeitsstufe gemäß der Erfindung aus.
Es versteht sich von selbst, daß die Anzahl der Geschwindigkeitsstufen des Scheibenwischer - Antriebsmotors bei der Verwirklichung der Erfindung keine Rolle spielt.

Mit einer geringfügigen Abwandlung des gezeigten Flußdiagramms wird ferner auch die automatische Umschaltung derart durchführbar, daß aus allen Geschwindigkeitsstufen auf eine einzige niedrigere zurückgeschaltet wird, welche dann vorzugsweise eine langsame Intervallstufe wäre. Der Rechenschritt ASW = MSW - 1 braucht nur durch eine Wertzuweisung ASW = N (= der Zahlenwert, der der einzuschaltenden Geschwindigkeitsstufe entspricht), ersetzt zu werden.

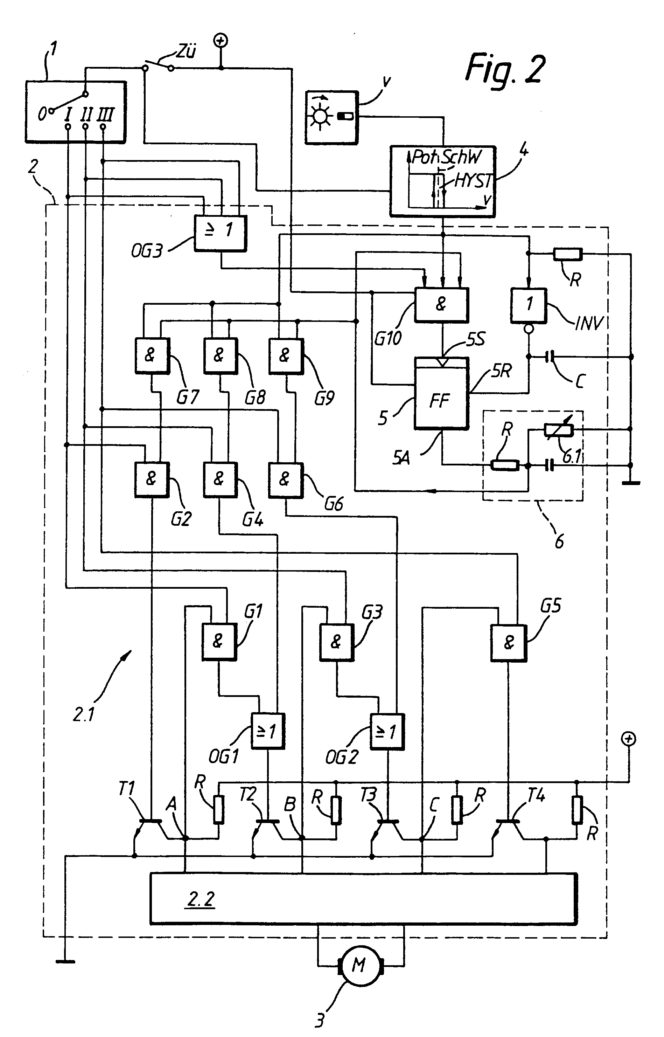

**Figur 2** zeigt ein schematisches Schaltbeispiel einer Vorrichtung, die zur Durchführung des erfindungsgemäßen Verfahrens geeignet ist. Ein über einen Zündschalter Zü an Plus-Potential angeschlossener Scheibenwischer - Steuerschalter 1 hat neben seiner Ausschaltstellung 0 die drei üblichen Betriebsstellungen mit Festkontakten I für eine Intervall-, II für eine langsame und III für eine schnelle Scheibenwischer - Geschwindigkeitsstufe. Der Steuerschalter 1 bzw. seine Festkontakte I bis III sind an ein elektronisches Steuergerät 2 angeschlossen, welches ein Netzwerk 2.1 aus logischen Gattern und weiteren Bauelementen - dessen Funktion später eingehend beschrieben wird - und eine Endstufe 2.2 aufweist. Es aktiviert nach Maßgabe der Betriebsstellungen des Steuerschalters 1 bzw. der logischen Signalverknüpfungen im Netzwerk 2.1 einen elektrischen Antriebsmotor 3 für einen oder mehrere -nicht gezeigte - Scheibenwischer in verschiedene Geschwindigkeitsstufen für Dauer- oder Intervallbetrieb.
Ferner ist auch ein Schwellwertschalter 4 an das Steuergerät 3 zur Übergabe von Schwellwertschaltsignalen angeschlossen. Dem ebenfalls über den Zündschalter Zü mit Spannung versorgten Schwellwertschalter 4 wird als Eingangssignal ein fahrgeschwindigkeitsproportionales Signal eines Fahrgeschwindigkeitssensors v, z. B. eines elektronischen Tachometers, zugeführt. An einem definierten Schwellwert der Fahrgeschwindigkeit - durch SchW angedeutet -, der z. B. etwa 40 km/h beträgt, erzeugt der Schwellwertschalter 4
- beim Aufwärtsdurchlaufen eine negative Schaltflanke,
- beim Abwärtsdurchlaufen eine positive Schaltflanke,
wobei selbstverständlich eine gewisse Hysterese HYST zwischen Auf- und Abwärtsdurchlaufen vorgesehen ist.
Das Netzwerk 2.1 enthält für jeden der Festkontakte I, II und III einen Strompfad zur Endstufe 2.2.
Der Festkontakt I ist unmittelbar an je einen Eingang zweier UND-Gatter G1 und G2 angeschlossen.
Der Festkontakt II ist unmittelbar an je einen Eingang zweier UND-Gatter G3 und G4 angeschlossen.

Der Festkontakt III ist unmittelbar an je einen Eingang zweier UND-Gatter G5 und G6 angeschlossen.
Die Ausgänge der UND-Gatter G1 und G4 sowie G3 und G6 sind über je ein ODER-Gatter OG1 und OG2 verknüpft.
Die Ausgänge der Gatter G2, OG1, OG2 bzw. G5 sind an je eine Treiberstufe angeschlossen und darin jeweils auf die Basen von Transistoren T1, T2, T3 bzw. T4 gelegt, deren Kollektor jeweils über einen Widerstand R an Plus-Potential und deren Emitter jeweils an Masse angeschlossen ist. An den Kollektoren der Transistoren T1, T2 bzw. T3 sind an Knoten A, B bzw. C jeweils Anschlüsse zur Endstufe 2.2 vorgesehen. Ferner ist das jeweilige, vom Schaltzustand der Transistoren T1 bis T3 abhängige elektrische Potential derselben Knoten A, B bzw. C jeweils auf die zweiten Eingänge der UND-Gatter G1, G3 bzw. G5 gelegt.
Auf die jeweils zweiten Eingänge der UND-Gatter G2, G4 bzw. G6 sind Ausgänge von UND-Gattern G7, G8 bzw. G9 gelegt. Deren erste Eingänge sind an den Ausgang des Schwellwertschalters 4 angeschlossen, während ihre jeweils zweiten Eingänge über ein signalverzögernd wirkendes R-C-Glied 6 an den Ausgang 5A einer z. B. als Flip-Flop (FF) ausgeführten Speicherschaltung 5 angeschlossen sind. Das R-C-Glied 6 verfügt über einen einstellbaren Entladewiderstand 6.1. Die Speicherschaltung 5 weist einen statischen RESET-Eingang 5R auf. Dieser wird über einen Inverter INV von dem Ausgang des Schwellwertschalters 4 gesteuert. An die Verbindung zwischen dem Inverterausgang und dem RESET-Eingang 5R ist noch eine signalverzögernd wirkende Kapazität C angeschlossen, während der Eingang des Inverters INV zusätzlich noch über einen Widerstand R an Masse gelegt ist. An einen dynamischen SET-Eingang 5S der Speicherschaltung 5 ist der Ausgang eines weiteren UND-Gatters G10 mit drei Eingängen angeschlossen.
Der erste Eingang des UND-Gatters G10 ist mit dem Ausgang des Schwellwertschalters 4 verbunden.
An den zweiten Eingang des UND-Gatters G10 sind alle Festkontakte I, II bzw. III des Steuerschalters über ein ODER-Gatter OG3 angeschlossen.
Der dritte Eingang des UND-Gatters G10 ist über das R-C-Glied 6 an den Ausgang 5A der Speicherschaltung 5 angeschlossen.

### Funktion:

Vorab wird nun zum besseren Verständnis der Vorrichtung kurz die Arbeitsweise der Speicherschaltung 5 und ihrer unmittelbaren Peripherie beschrieben.
Die Speicherschaltung 5 ist grundsätzlich sowohl bei abgeschalteter Zündung als auch bei unterhalb des Schwellwertes liegender Fahrgeschwindigkeit im statischen RESET-Zustand. Die Versorgungsspannung des Inverters INV und der Speicherschaltung 5 müssen daher, wie angedeutet, dauernd an Plus-Potential liegen. Im RESET-Zustand liegt am Ausgang 5A der Speicherschaltung 5 Plus-Potential vor. In den SET-Zustand - in welchem der Ausgang 5A potentialfrei wird - wird die Speicherschaltung 5 nur dann umgeschaltet, wenn
a) am Invertereingang Plus-Potential anliegt,
b) eine positive Schaltflanke am Ausgang des UND-Gatters G10 vorliegt und
c) diese positive Schaltflanke durch einen Schaltvorgang am Steuerschalter 1 erzeugt wird.
Durch die Kapazität C am Inverterausgang wird nämlich sichergestellt, daß ein Wechsel des Inverterausgangssignals von Plus-Potential auf Masse in jedem Fall gegenüber einer positiven Schaltflanke des Schwellwertschalters 4 verzögert wird, so daß eine nur aus letzterer resultierende positive Schaltflanke am Ausgang des UND-Gatters G10 wegen des statischen RESET-Signals **nicht** zum Setzen der Speicherschaltung 5 führen kann.

In der Ausschaltstellung des Steuerschalters 1 sind alle Treiber - Transistoren T1 bis T4 gesperrt, d. h. an den Knoten A, B und C liegt jeweils Plus-Potential. Unterhalb des Fahrgeschwindigkeits - Schwellwerts gibt der Schwellwertschalter 4 ein Signal mit Plus-Potential ab, während sein Ausgang oberhalb des Schwellwerts Massepotential hat. Folglich sind oberhalb des Schwellwerts die UND-Gatter G7, G8 und G9 und damit auch die UND-Gatter G2, G4 und G6 gesperrt.

Der Fahrzeugbenutzer möge nun manuell den Steuerschalter 1 in eine Betriebsstellung schalten, wobei die Fahrgeschwindigkeit des Kraftfahrzeugs großer als der Schwellwert sei. Das an dessen Schaltkontakt anliegende Plus-Potential wird damit auf einen der Festkontakte I, II oder III gelegt.

Beim angenommenen Schalten auf den Festkontakt I wird Plus-Potential auf je einen Eingang der UND-Gatter G1 und G2 gelegt. Ferner schaltet das ODER-Gatter OG3 durch und legt Plus-Potential auf einen Eingang des UND-Gatters G10. Da nunmehr beide Eingänge des UND-Gatters G1 an Plus-Potential liegen - vom Knoten A und vom Festkontakt I her -, schaltet der Transistor T2 durch, und die Endstufe 2.2 aktiviert den Antriebsmotor 3 zum Intervallbetrieb.
In gleicher Weise können über die Festkontakte II und III die langsame und die schnelle Dauer - Geschwindigkeitsstufe des Antriebsmotors 3 eingeschaltet werden. Dabei wird jeweils der der nächstniedrigeren Geschwindigkeitsstufe zugeordnete Transistor T2 bzw. T3 durch Umschalten der UND-Gatter G1, G3 bzw. G5 zugesteuert und der der einzuschaltenden Geschwindigkeitsstufe zugeordnete - T3 bzw. T4 - aufgesteuert.
Wird die Fahrgeschwindigkeit nun während des Wischerbetriebs unter den Schwellwert abgesenkt, so schaltet der Ausgang des Schwellwertschalters 4 von Masse auf Plus-Potential um.

Die Speicherschaltung 5 bleibt aus den oben erwähnten Gründen noch im RESET-Zustand; d. h., zu dem bisher schon an einem Eingang der UND-Gatter G7, G8 und G9 liegenden Plus - Signal vom Ausgang 5A der Speicherschaltung 5 kommt nun das Ausgangssignal des Schwellwertschalters 4 ebenfalls mit Plus-Potential hinzu, so daß die UND-Gatter G7, G8 und G9 nun durchgeschaltet werden. In der Folge wird auch dasjenige der UND-Gatter G2, G4 oder G6 durchgeschaltet, an dessen einem Eingang bereits Plus-Potential von einem der Festkontakte des Steuerschalters 1 anliegt. Im vorliegenden Fall ist der Festkontakt I für Intervallbetrieb angewählt, so daß nun das UND-Gatter G2 durchschalten kann. Daraufhin wird der Transistor T1 aufgesteuert und das Plus-Potential am Knoten A verschwindet. Das UND-Gatter G1 sperrt, der Transistor T2 ebenfalls, und der Antriebsmotor 3 wird auf die nächstniedrigere Geschwindigkeitsstufe, hier also auf Stillstand, automatisch umgeschaltet.

Dieser von der manuell eingestellten Betriebsstellung des Steuerschalters 1 abweichende Zustand bleibt so lange aufrechterhalten, bis entweder
a) die Fahrgeschwindigkeit wieder größer als der Schwellwert wird oder
b) der Fahrzeugbenutzer den Steuerschalter 1 in irgendeinem Sinn betätigt.

### Zu a):

Beim Durchlaufen des Fahrgeschwindigkeits - Schwellwerts von unten her schaltet der Schwellwertschalter 4 seinen Ausgang wieder von Plus-Potential auf Masse um. Damit wird unverzüglich das UND-Gatter G10 gesperrt und der Eingang des Inverters INV mit Masse verbunden. Mit dem daraus folgenden Sperren der UND-Gatter G7, G8 und G9 wird der vor dem Durchlaufen des Fahrgeschwindigkeits - Schwellwerts am Steuerschalter 1 eingeschaltete Betriebszustand des Antriebsmotors 3 wieder hergestellt - G2 und T1 sperren, G1, OG1 und T2 schalten durch, und der Antriebsmotor 3 geht in Intervall-Betrieb.
Die Speicherschaltung 5 ist wieder in ihren statischen RESET-Zustand umgeschaltet.

### Zu b):

Betätigt der Fahrzeugbenutzer den Steuerschalter 1 bei unterhalb des Schwellwerts liegender Fahrgeschwindigkeit in irgendeinem Sinn, so wird während des Umschaltens des Schaltkontaktes des Steuerschalters 1 der mit den nicht überlappenden Festkontakten I, II und III verbundene Eingang des UND-Gatters G10 kurzzeitig potentialfrei; das UND-Gatter G10 sperrt und erzeugt beim neuerlichen Durchschalten - welches beim Verbringen des Steuerschalters 1 in eine andere Betriebsstellung oder in dieselbe Betriebsstellung wie vorher geschieht - wiederum eine positive Schaltflanke am dynamischen SET-Eingang der Speicherschaltung 5. Weil aber nunmehr Masse am RESET-Eingang der Speicherschaltung 5 anliegt - der Invertereingang hat ja vom Schwellwertschalter 4 her bereits Plus-Potential - wird die Speicherschaltung 5 in den SET-Zustand versetzt. Das R-C-Glied 6 bewirkt dabei, daß das UND-Gatter G10 so lange durchgeschaltet bleibt, bis die Speicherschaltung 5 sicher umgeschaltet hat. Im SET-Zustand der Speicherschaltung ist deren Ausgang 5A potentialfrei, so daß die UND-Gatter G7, G8 und G9 nunmehr sperren, bis der Fahrgeschwindigkeits - Schwellwert wieder überschritten und die Speicherschaltung 5 durch die negative Schaltflanke des Schwellwertschalters 4 wieder in den RESET-Zustand geschaltet wird.

**Jeder** Schaltvorgang am Steuerschalter 1, der unterhalb des Fahrgeschwindigkeits - Schwellwerts vorgenommen wird, nachdem dieser Schwellwert einmal von oben her durchlaufen wurde, hat in der beschriebenen Schaltanordnung also die Folge, daß die durch den Schwellwertschalter 4 über das Netzwerk 2.1 bewirkte automatische Umschaltung des Antriebsmotors 3 in die nächstniedrigere Geschwindigkeitsstufe aufgehoben und die nunmehr tatsächlich angewählte Geschwindigkeitsstufe eingeschaltet wird.

## Patentansprüche

1. Verfahren zur Steuerung eines elektrischen Antriebsmotors (3) einer Kraftfahrzeug - Scheibenwischanlage in wenigstens zwei unterschiedliche Geschwindigkeitsstufen (I, II, III) mittels eines manuell bedienbaren mehrstufigen Scheibenwischer - Steuerschalters (1),
nach welchem Verfahren der Antriebsmotor (3) ferner
- aus wenigstens einer durch den Steuerschalter (1) eingeschalteten Geschwindigkeitsstufe (I, II oder III)
- beim Durchlaufen eines vorbestimmten Schwellwertes (Schw) der Kraftfahrzeug - Fahrgeschwindigkeit (v)
- von einer höheren Fahrgeschwindigkeit her
- unabhängig von einer Bedienung des Steuerschalters (1)
- in eine niedrigere Geschwindigkeitsstufe (0, I oder II) automatisch umschaltbar ist,
**gekennzeichnet durch**
die automatische Umschaltung übersteuerndes Einschalten jeder jeweils durch manuelle Betätigung des Steuerschalters (1) ausgewählten Geschwindigkeitsstufe (0, I, II oder III) aus der automatisch eingeschalteten niedrigeren Geschwindigkeitsstufe (0, I oder II).

2. Verfahren nach Anspruch 1,
**gekennzeichnet durch**
- automatische Umschaltung des Antriebsmotors (3) aus jeder manuell eingeschalteten Geschwindigkeitsstufe (I, II, III) in eine niedrigere Geschwindigkeitsstufe (0, I oder II) beim Durchlaufen des Schwellwertes (Schw) von einer höheren Fahrgeschwindigkeit her,
- Registrierung jeder
- unterhalb des Schwellwertes (Schw) der Fahrgeschwindigkeit und
- nach erfolgter automatischer Umschaltung des Antriebsmotors (3) in eine niedrigere Geschwindigkeitsstufe (0, I oder II)
vorgenommenen Betätigung des Steuerschalters (1) und
- Einschaltung jeder durch diese Betätigung des Steuerschalters (1)
gewählten Geschwindigkeitsstufe des Antriebsmotors (3) bei Aufhebung der aktuellen automatischen Umschaltung bis zum erneuten Durchlaufen des Schwellwertes (Schw) von einer höheren Fahrgeschwindigkeit her.

3. Verfahren nach Anspruch 1 oder 2,
**gekennzeichnet durch**
automatische Umschaltung jeder eingeschalteten Geschwindigkeitsstufe (I, II oder III) auf die nächstniedrigere beim Durchlaufen des Schwellwertes der Fahrgeschwindigkeit von oben her.

4. Verfahren nach Anspruch 1 oder 2,
**gekennzeichnet durch**
automatische Umschaltung jeder eingeschalteten Geschwindigkeitsstufe (I, II oder III) auf eine einzige bestimmte niedrigere beim Durchlaufen des Schwellwertes der Fahrgeschwindigkeit von oben her.

## Claims

1. Method for controlling an electric drive motor (3) of a motor vehicle windscreen wiping system in at least two different speed steps (I, II, III) by means of an manually operated multi-step windscreen wiper control switch (1),
in accordance with which method the drive motor (3) also can be automatically switched
- from at least one speed step (I, II or III) switched on by the control switch (1)
- when the speed passes through a predetermined threshold value (Schw) of the motor vehicle travelling speed (v)
- from a higher travelling speed
- independently of an operation of the control switch (1)
- into a lower speed step (0, I or II),
characterized by
switching-on, which overrides the automatic switching, of each speed step (0, I, II or III) in each case selected by manual operation of the control switch (1), from the automatically switched-on lower speed step (0, I or II).

2. Method according to Claim 1, characterized by
- automatic switching of the drive motor (3) from each manually switched-on speed step (I, II, III) into a lower speed step (0, I or II) when the speed passes through the threshold value (Schw) from a higher travelling speed,
- registration of each operation of the control switch (1)
carried out
- below the threshold value (Schw) of the travelling speed and
- after completed automatic switching of the drive motor (3) into a lower speed step (0, I or II) and
- switching-on of each speed step, selected by this operation of the control switch (1), of the drive motor (3) when the current automatic switching is cancelled until the speed again passes through the threshold value (Schw) from a higher travelling speed.

3. Method according to Claim 1 or 2, characterized by automatic switching of each switched-on speed step (I, II, or III) to the next lower one when the speed passes through the threshold value of the travelling speed from above.

4. Method according to Claim 1 or 2, characterized by automatic switching of each switched-on speed step (I, II or III) to a single particular lower one when the speed passes through the threshold value of the travelling speed from above.

## Revendications

1. Procédé de commande d'un moteur électrique d'entraînement (3) d'une installation d'essuie-glace de véhicule automobile selon au moins deux échelons de vitesse différents (I, II, III) au moyen d'un commutateur de commande d'essuie-glace (1) à plusieurs échelons, manoeuvrable manuellement,
procédé selon lequel le moteur d'entraînement (3) peut en outre,
- à partir d'au moins un échelon de vitesse (I, II ou III) enclenché par le commutateur de commande (1)
- lors du franchissement d'une valeur de seuil prédéterminée (Schw) de la vitesse de marche (v) du véhicule automobile
. à partir d'une vitesse de marche supérieure
- indépendamment d'une manoeuvre du commutateur de commande (1),
- être commuté automatiquement dans un échelon inférieur de vitesse (0, I ou II),
caractérisé par un enclenchement, contrebalançant la commutation automatique, de chaque échelon de vitesse (0, I, II ou III), sélectionné respectivement par un actionnement manuel du commutateur de commande (1), à partir de l'échelon inférieur de vitesse (0, I ou II) enclenché automatiquement.

2. Procédé selon la revendication 1, caractérisé par :
- une commutation automatique du moteur d'entraînement (3) depuis chaque échelon de vitesse (I, II, III) enclenché manuellement jusque dans un échelon de vitesse inférieur (0, I ou II) lors du franchissement de la valeur de seuil (Schw) à partir d'une vitesse de marche supérieure,
- un enregistrement de chaque actionnement du commutateur de commande (1)
- effectué en-dessous de la valeur de seuil (Schw) de la vitesse de marche et
- après une commutation du moteur d'entraînement (3) qui a été effectuée automatiquement, jusque dans un échelon de vitesse inférieur (0, I ou II) et
- un enclenchement de chaque échelon de vitesse du moteur d'entraînement (3), sélectionné par cet actionnement du commutateur de commande (1), en cas de supression de la commutation automatique actuelle jusqu'à un nouveau franchissement de la valeur de seuil (Schw) à partir d'une vitesse de marche supérieure.

3. Procédé selon la revendication 1 ou 2, caractérisé par une commutation automatique de chaque échelon de vitesse enclenché (I, II ou III) dans l'échelon immédiatement inférieur lors d'un franchissement de la valeur de seuil de la vitesse de marche à partir du haut.

4. Procédé selon la revendication 1 ou 2, caractérisé par une commutation automatique de chaque échelon de vitesse enclenché (I, II ou III) dans un seul échelon inférieur déterminé lors d'un franchissement de la valeur de seuil de la vitesse de marche à partir du haut.
